Europäisches Patentamt

European Patent Office

Office européen des brevets

(19)

(11) Numéro de publication: **0 253 730 B1**

(12) **FASCICULE DE BREVET EUROPEEN**

(45) Date de publication de fascicule du brevet:
09.10.91

(51) Int. Cl.⁵: **G21F 9/34, G21C 19/06**

(21) Numéro de dépôt: 87401659.5

(22) Date de dépôt: 15.07.87

(54) **Dispositif de stockage à sec de matériaux dégageant de la chaleur, notamment de matériaux radioactifs.**

(30) Priorité: 17.07.86 FR 8610409

(43) Date de publication de la demande:
20.01.88 Bulletin 88/03

(45) Mention de la délivrance du brevet:
09.10.91 Bulletin 91/41

(84) Etats contractants désignés:
BE CH DE GB IT LI SE

(56) Documents cités:
DE-A- 2 711 405
DE-A- 2 730 729
FR-A- 2 502 829
GB-A- 2 046 162

(73) Titulaire: COMMISSARIAT A L'ENERGIE ATO-
MIQUE Etablissement de Caractère Scientifique Technique et Industriel
31/33, rue de la Fédération
F-75015 Paris(FR)

(72) Inventeur: Chaudon, Luc
30, Chemin des Fayettes
F-26130 Saint-Paul-Trois-Chateaux(FR)
Inventeur: Dobremelle, Michel
7, rue du Pot d'Etain
F-78730 Saint Arnoult En Yvelines(FR)
Inventeur: Fabre, Jean-Claude
19, rue de Pierrelatte
F-30130 Pont-Saint-Esprit(FR)
Inventeur: Geffroy, Jean
11 Bis, rue des Moines
F-78000 Versailles(FR)

(74) Mandataire: Mongrédien, André et al
c/o BREVATOME 25, rue de Ponthieu
F-75008 Paris(FR)

## Description

La présente invention a pour objet un dispositif de stockage à sec de matériaux dégageant de la chaleur, utilisable en particulier pour le stockage de matériaux radioactifs.

Elle s'applique à tous types de combustibles irradiés ou à certaines catégories de déchets nucléaires. Il s'agit notamment de combustibles issus de réacteurs nucléaires expérimentaux produits en séries limitées ou ayant une faible teneur en matières fissiles récupérables, de combustibles non standards, de déchets variés tels que des résidus de gaines ou des produits de fission pour lesquels le retraitement ou le stockage définitif ne peuvent encore être appliqués.

La solution utilisée pour la gestion de ces objets est l'entreposage d'attente de longue durée (plusieurs dizaines d'années), période à l'issue de laquelle un traitement définitif sera appliqué.

Pour stocker des matériaux irradiés dégageant de la chaleur, trois conditions principales doivent être remplies :

- le confinement des matières radioactives empêchant la contamination de l'environnement ;
- la protection biologique évitant l'irradiation des personnels d'exploitation et de l'environnement, et
- le refroidissement thermique assurant un niveau de température acceptable pour une bonne conservation des matériaux et des structures au sein desquelles ils sont maintenus.

Il existe à l'heure actuelle deux principales techniques pour le stockage provisoire de combustibles nucléaires irradiés : le stockage sous eau, qui représente la solution la plus généralement mise en oeuvre à l'échelle industrielle, et le stockage à sec.

Dans la technique de stockage sous eau, les combustibles irradiés sont immergés dans l'eau d'un bassin. Cette eau est en permanence décontaminée par passage sur des dispositifs d'épuration tels que des filtres ou des résines échangeuses d'ions. Elle est également refroidie en permanence par passage au travers d'un échangeur thermique. Dans ces conditions, l'eau assure trois fonctions principales : tout d'abord, elle participe au confinement en retenant les substances radioactives qui ont pu s'échapper des combustibles. D'autre part, elle assure la protection biologique en arrêtant les rayonnements : cinq à six mètres de hauteur d'eau assurent une protection efficace contre la plupart des rayonnements. Enfin, l'eau assure le refroidissement des déchets en jouant le rôle d'un caloporteur qui cède, lors de son passage à travers l'échangeur, l'énergie calorifique dégagée par les combustibles.

Ce type d'installations est utilisé pour recevoir les combustibles provenant de l'exploitation des réacteurs : c'est le cas des piscines de déchargement ou des piscines de stockage assurant une fonction de tampon à l'entrée des usines de retraitement du combustible. Ces installations sont génératrices de forts volumes d'effluents, nécessitent des investissements importants et présentent des coûts d'exploitation élevés.

Dans l'autre type de stockage, c'est-à-dire le stockage à sec, trois méthodes principales sont utilisées : le stockage en château, le stockage en silo et le stockage en casemate.

Dans le cas du stockage en château, les combustibles sont placés à l'intérieur d'une cavité à parois métalliques entourées d'un système composé de différents matériaux assurant la protection biologique. Dans ce cas, le refroidissement se fait par conduction et rayonnement entre le combustible lui-même et la paroi métallique servant de barrière de confinement et par convection et rayonnement entre la barrière de confinement et l'environnement.

Dans le cas du stockage en silo, on peut utiliser soit des silos enterrés, soit des silos placés en surface. Le combustible est placé dans une enceinte de confinement (généralement constituée par un conteneur métallique à couvercle soudé), puis logé dans un silo, en béton le plus souvent. L'espacement entre les silos est déterminé par les conditions locales. Dans le cas d'un silo enterré, le transfert de chaleur entre le combustible et la barrière de confinement se fait par conduction et rayonnement, tandis que le transfert de chaleur entre la barrière de confinement et l'environnement se fait par conduction. Dans le cas d'un silo en surface, le transfert de chaleur entre le combustible et la barrière de confinement se fait par conduction et rayonnement, tandis que le transfert de chaleur entre la barrière de confinement et l'environnement se fait par convection naturelle et par rayonnement.

Dans le stockage en casemate, les déchets sont placés à l'intérieur de tubes verticaux eux-mêmes répartis à l'intérieur d'un local fermé par une barrière de protection biologique, par exemple une paroi en béton. Les tubes sont fermés à leur partie inférieure et ouverts à leur partie supérieure, le combustible irradié étant introduit dans les tubes au moyen d'une machine de transfert qui permet de faire passer les produits à stocker au travers d'orifices convenablement disposés dans la barrière de protection biologique. Ces orifices se trouvent dans la paroi supérieure du local et permettent l'accès à l'intérieur des tubes depuis une salle de manutention située au-dessus de ce local. La chaleur dégagée par les combustibles est évacuée par convection, généralement par une circulation d'air qui peut être forcée ou naturelle.

Dans un tel dispositif, l'arrivée d'air froid se trouve généralement à la partie inférieure du local tandis que l'extraction d'air chaud peut se trouver soit à la partie supérieure de celui-ci, soit dans une paroi latérale. Un tel dispositif présente le défaut que l'air arrivant au contact de l'un des puits peut avoir été déjà réchauffé en passant au contact d'un autre puits, ce qui rend le refroidissement peu efficace, voire inexistant pour certains puits. Ceci limite la capacité de stockage de certains locaux ou nécessite la présence de ventilateurs ou d'autres appareillages assurant une ventilation forcée du local, ce qui rend les installations plus complexes, donc plus coûteuses.

La présente invention a pour but de remédier à ces inconvénients en proposant un dispositif de stockage à sec de matériaux dégageant de la chaleur permettant de refroidir ceux-ci efficacement par convection naturelle.

Pour cela, l'invention propose un dispositif de stockage à sec de matériaux dégageant de la chaleur comprenant les caractéristiques de la revendication 1.

Le fluide caloporteur le plus souvent utilisé est l'air, mais on ne sortirait pas du cadre de l'invention en utilisant un autre fluide, par exemple un autre gaz. L'expression "fluide froid" désigne le fluide qui pénètre dans le local par l'entrée de fluide froid et qui se trouve à une certaine température (par exemple la température ambiante extérieure s'il s'agit de l'air) tandis que l'expression "fluide chaud" désigne le fluide qui a été réchauffé en passant au contact du puits et se trouve donc à une température supérieure à celle qu'il avait au moment où il est entré dans le local. L'expression "couche limite" désigne la couche d'air chaud qui se forme naturellement autour de chaque puits à cause de la chaleur dégagée par les matériaux stockés à l'intérieur.

Ainsi, chaque puits est refroidi par du fluide froid qui pénètre à l'intérieur du local, le fluide s'échauffant au contact des parois du puits et montant le long de celui-ci. Il se forme ainsi une couche d'air chaud à la partie supérieure du local, cet air chaud étant évacué par la sortie d'air chaud prévue à la partie supérieure de celui-ci. La couche limite entourant un puits n'étant en contact ni avec les parois latérales du local, ni avec la couche limite d'un autre puits, chaque puits est refroidi uniquement par du fluide froid qui a pénétré dans le local et non par du fluide qui a déjà été en contact avec un autre puits et a déjà été réchauffé. Ainsi, le refroidissement peut se faire par convection naturelle sans qu'il soit nécessaire de prévoir des ventilateurs ou autres moyens pour obtenir une circulation forcée du fluide.

Selon un autre aspect de l'invention, la disposition des matériaux stockés dans les puits est telle qu'aucun matériau ne se trouve dans la partie supérieure du puits. En effet, étant donné que le fluide servant au refroidissement des puits monte le long de ceux-ci, il se crée une couche d'air chaud à la partie supérieure du local. Ainsi, l'air circulant en direction de l'orifice d'extraction de fluide passe au contact de plusieurs puits consécutifs. Cependant, comme il passe au contact de ceux-ci dans une zone où il n'y a pas de produits stockés, il ne s'échauffe donc plus et ne gêne pas le refroidissement des puits.

Le local de stockage est fermé à sa partie supérieure par une dalle supérieure qui peut être en béton et constitue une barrière de protection biologique. Cette dalle présente une face supérieure qui constitue le plancher de la salle de manutention et une face inférieure qui constitue le plafond du local de stockage. Cette face inférieure peut être horizontale ou, dans une variante de réalisation, inclinée d'un certain angle par rapport à un plan horizontal et disposée de manière à s'élever au fur et à mesure qu'on s'approche de l'orifice de sortie : cette disposition a pour effet de favoriser l'évacuation de l'air chaud vers l'orifice de sortie. On peut encore utiliser un déflecteur, c'est-à-dire un panneau plan incliné de la même manière et réalisé dans un matériau qui résiste aux températures atteintes dans le local de stockage.

La sortie de fluide chaud est reliée à un conduit d'extraction équipé d'un circuit dérivé de secours. La présence d'un tel circuit est surtout utile dans le cas de stockage de produits radioactifs pour le cas où un ou plusieurs puits présenterait des fuites.

De préférence, la conduite est équipée d'un ventilateur d'extraction, celui-ci pouvant être relié au détecteur de radioactivité par des moyens d'asservissement. Ainsi, si l'on détecte de la radioactivité dans le fluide extrait par le conduit d'extraction, la sonde commande l'obturation de ce dernier et le fluide passe à travers la conduite de dérivation où il est filtré par le filtre à très haute efficacité. C'est donc de l'air ou un fluide exempt de radioactivité qui est rejeté à l'extérieur.

L'invention apparaîtra mieux à la lecture de la description qui va suivre, donnée à titre d'exemple purement illustratif et nullement limitatif, en référence aux dessins annexés, dans lesquels :

- la figure 1 est une vue schématique en coupe verticale d'un dispositif conforme à l'invention comprenant un seul puits,
- la figure 2 est un schéma de principe illustrant la création d'une couche limite d'air autour d'un puits,
- la figure 3 est une vue schématique en perspective, avec éclatement partiel, d'un dispositif conforme à l'invention dans le cas de deux puits de stockage,

- la figure 4 est une vue schématique en perspective et en coupe d'un dispositif conforme à l'invention contenant un nombre quelconque de puits et montrant comment le local de stockage peut être agrandi,
- la figure 5 est une vue schématique en coupe vertical de l'ensemble d'une installation de stockage comprenant un dispositif selon l'invention,
- la figure 6 est une vue schématique en coupe verticale, à échelle agrandie, d'un puits utilisé dans l'invention,
- la figure 7 est une vue schématique en coupe verticale illustrant le circuit dérivé de secours équipant le conduit d'extraction d'air,
- la figure 8 est une vue schématique en coupe verticale montrant comment le plafond du local de stockage peut être incliné ou équipé d'un déflecteur, et
- la figure 9 est une vue schématique en élévation illustrant une autre disposition possible pour les puits de stockage.

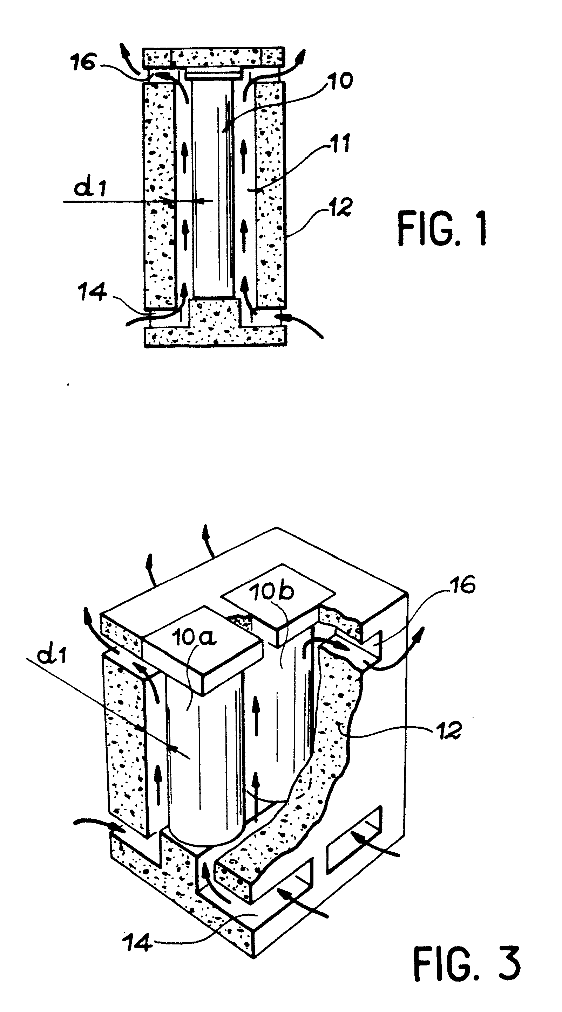

La figure 1 illustre le principe de l'invention dans le cas d'un module élémentaire ne comprenant qu'un seul puits. Dans cet exemple, le puits 10 se présente sous la forme d'un cylindre métallique d'axe vertical, à l'intérieur duquel sont placés des déchets radioactifs dégageant de la chaleur. Le puits 10 est entouré d'une paroi de protection biologique 12, généralement en béton. Cette paroi présente à sa partie inférieure au moins un orifice d'entrée de fluide froid 14 (dans la plupart des cas, ce fluide est l'air) et à sa partie supérieure au moins un orifice d'extraction de fluide chaud 16.

Comme les matériaux stockés à l'intérieur du puits 10 dégagent de la chaleur, ceci a pour effet de chauffer les parois du puits. L'air se trouvant au contact de celles-ci à l'extérieur du puits s'échauffe également, monte le long du puits et sort du local par l'orifice ou les orifices 16 d'extraction d'air chaud. Ceci provoque un appel d'air à la partie inférieure du local et une nouvelle quantité d'air froid pénètre par l'orifice 14. Il s'établit ainsi une circulation d'air de bas en haut depuis l'orifice d'entrée 14 jusqu'à l'orifice de sortie 16.

L'air qui s'échauffe au contact de la paroi du puits 10 et monte le long de celui-ci constitue une couche d'air chaud, appelée "couche limite" dans la présente description, dont l'épaisseur augmente au fur et à mesure que l'air s'élève le long du puits, comme on le verra ci-après. Selon l'invention, la distance $d_1$ entre la paroi du puits et la paroi latérale 12 limitant le local est telle que la couche limite ne soit pas en contact avec la paroi 12, afin de faciliter la circulation d'air chaud et d'avoir une meilleure efficacité de refroidissement.

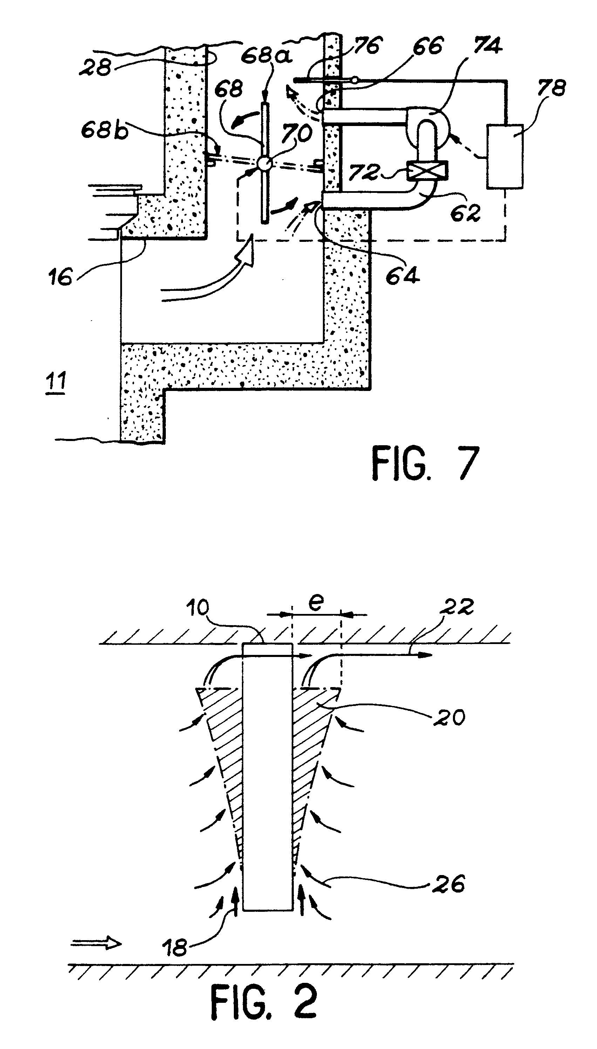

Le mécanisme de refroidissement du puits 10 est illustré sur le schéma de principe de la figure 2.

Sur cette figure, on retrouve le puits de stockage 10 en position verticale, l'air froid qui arrive à la partie inférieure de celui-ci étant symbolisé par les flèches 18. L'air s'échauffant au contact des parois du puits 10 monte le long de celui-ci et il se crée une couche ascensionnelle d'air chaud appelée "couche limite" 20 qui est représentée par la zone hachurée sur la figure 2. L'épaisseur de cette couche est très faible, voire quasiment nulle, à la partie inférieure du puits et augmente régulièrement au fur et à mesure que l'air monte le long des parois du puits, pour atteindre une valeur limite e. Arrivé à la partie supérieure du puits, l'air a atteint sa température maximale et s'éloigne du puits pour se diriger vers les orifices d'extraction d'air, comme cela est symbolisé par les flèches 22. D'autre part, le fait que l'air circule de bas en haut au contact de la paroi du puits provoque un appel de l'air environnant, symbolisé par les flèches 26 ; cet air alimente la couche limite.

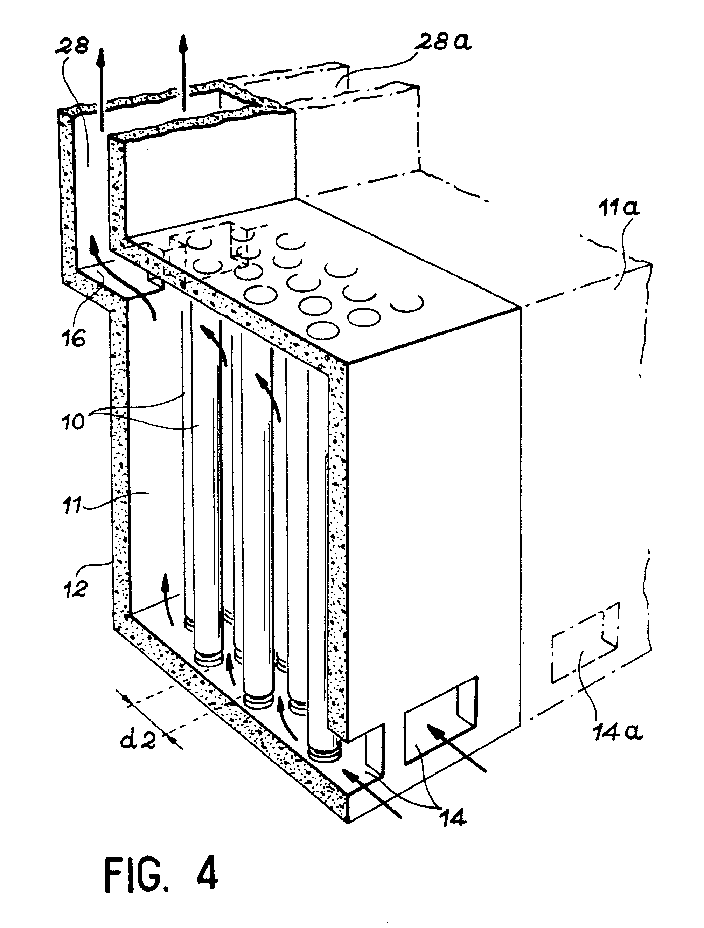

Selon l'invention, la distance entre la paroi extérieure d'un puits 10 et la paroi 12 du local est au moins égale à e afin que la circulation d'air ne soit pas gênée par la présence de la paroi 12, comme cela a été indiqué ci-dessus. D'autre part, dans le cas où le dispositif comporte plusieurs puits (comme par exemple les puits 10a et 10b de la figure 3), la distance entre les puits est supérieure ou égale à 2e afin que la couche limite 20 d'un puits donné ne soit pas en contact avec la couche limite du puits voisin. Ainsi, chaque puits est refroidi indépendamment des puits voisins, uniquement par l'air froid arrivant à la partie inférieure du local. Ceci permet d'avoir un local aussi vaste que l'on veut suivant le nombre de puits qu'il est nécessaire de stocker, le refroidissement étant effectué par convection naturelle quelles que soient les dimensions du local. La détermination de la forme et des dimensions de la couche limite découle de l'utilisation des équations générales de la mécanique des fluides appliquées à la convection naturelle.

On peut ainsi déterminer en fonction de la forme et des dimensions des puits, de la nature de leur matériau constitutif et de la puissance calorifique des matériaux stockés, la distance entre un puits et les parois du local ou la distance entre un puits et les puits adjacents. Les dimensions du local sont donc fonction du nombre de puits nécessaires et de la distance minimale entre deux puits voisins ou entre un puits et la paroi de protection biologique. S'il est nécessaire d'augmenter la capacité de stockage, on peut agrandir le local pour placer d'autres puits. De toute façon, quelles que soient les dimensions du local et le nombre de puits, le refroidissement est toujours effectué de la même manière par convection naturelle, chaque puits étant refroidi de manière indépendante.

Ceci est illustré à la figure 4, où l'on voit un local 11 limité par une paroi 12 et contenant un nombre important de puits 10. Dans le cas particulier illustré à la figure 4, les puits sont disposés en quinconce, mais on ne sortirait pas du cadre de l'invention en utilisant une autre disposition (pas carré ou rectangulaire, par exemple), pourvu que les conditions sur les distances soient respectées. Dans le dispositif représenté en traits pleins sur la figure 4, on voit plusieurs entrées d'air 14 à la partie inférieure du local 11 et plusieurs orifices d'extraction d'air chaud 16 à la partie supérieure du local, les orifices 16 étant en communication avec un conduit d'extraction 28. S'il est nécessaire d'augmenter la capacité de stockage du dispositif, on peut construire à côté du local 11 un autre local 11a représenté schématiquement en traits mixtes et ayant à sa partie inférieure au moins une entrée d'air froid 14a et à sa partie supérieure au moins une extraction d'air (non représentée) reliée à un conduit d'extraction 28a. Suivant les cas, le local 11a peut être construit à côté du local 11 et séparé de celui-ci par une paroi en béton ou en constituer le prolongement, les conduits d'extraction 28 et 28a ne formant qu'un seul conduit.

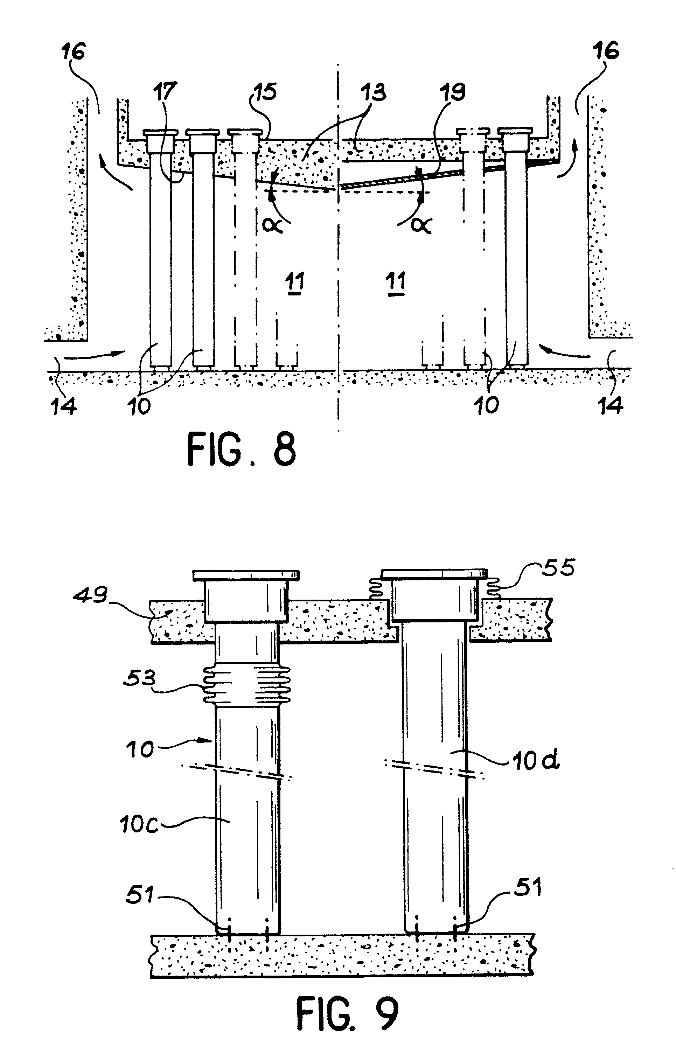

Dans le cas de la figure 4, le plafond du local de stockge 11 est plan et horizontal. Cependant, celui-ci peut être incliné comme cela est illustré à la figure 8. La partie gauche de cette figure correspond au cas où la face inférieure de la dalle supérieure est inclinée et la partie droite au cas où l'on utilise un déflecteur.

Sur la partie gauche de la figure 8, on voit la dalle 13 qui a une face supérieure 15 et une face inférieure 17 qui constitue le plafond du local de stockage 11. La face 15 est plane et horizontale, mais l'épaisseur de la dalle diminue au fur et à mesure qu'on s'approche de l'orifice de sortie 16, de sorte que le plafond 17 fait un angle avec l'horizontale et s'élève progressivement en direction de l'orifice de sortie 16.

Sur la partie droite de la figure 8, les deux faces de la dalle 13 sont planes et horizontales et celle-ci est d'épaisseur constante. Cependant, on a prévu un déflecteur 19 qui est plan et fait un angle α avec l'horizontale et s'élève progressivement en direction de l'orifice de sortie 16. Ce déflecteur 19 est réalisé en un matériau qui résiste aux températures atteintes dans la partie supérieure du local de stockage.

Dans l'un et l'autre cas, cette disposition favorise l'évacuation de l'air chaud en direction de l'orifice de sortie 16. Quant à l'angle α, il est déterminé en fonction des conditions thermiques et thermodynamiques propres à chaque local de stockage.

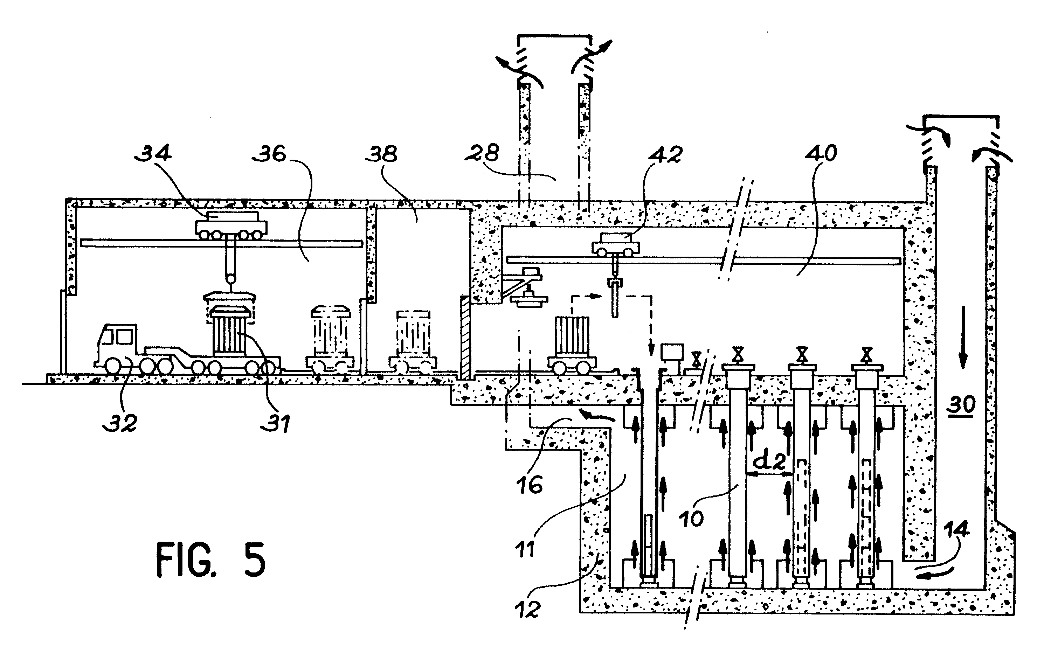

La vue en coupe verticale de la figure 5 illustre schématiquement l'ensemble de l'installation de stockage. On retrouve sur cette figure le local 11 à l'intérieur duquel sont placés les puits de stockage 10, ce local étant limité par une paroi 12 de protection biologique. L'air froid pénètre l'intérieur du local 11 par un ou plusieurs orifices d'entrée d'air froid 14 situés à sa partie inférieure. Dans le cas particulier illustré à la figure 5, l'orifice 14 est relié à l'extérieur par une cheminée d'arrivée d'air froid 30. L'air pénètre donc à la partie inférieure du local 11, monte verticalement le long des puits 10 en s'échauffant et sort du local 11 à travers l'orifice de sortie 16, lequel est relié à un conduit d'extraction d'air chaud 28.

Les déchets destinés à être stockés dans le dispositif objet de l'invention sont amenés à l'installation de stockage dans un château 31 transporté par un véhicule 32. Un pont roulant 34, placé dans la salle de réception 36, est utilisé pour le déchargement du château 31. Ce dernier est ensuite transporté dans un sas 38 et, de là, dans la salle de manutention 40 placée au-dessus du local 11. Un autre pont roulant 42 prend les matériaux radioactifs contenus dans le château (par exemple des combustibles irradiés en conteneurs) et les dépose à l'intérieur des puits 10 après enlèvement des bouchons fermant ces derniers à leur partie supérieure.

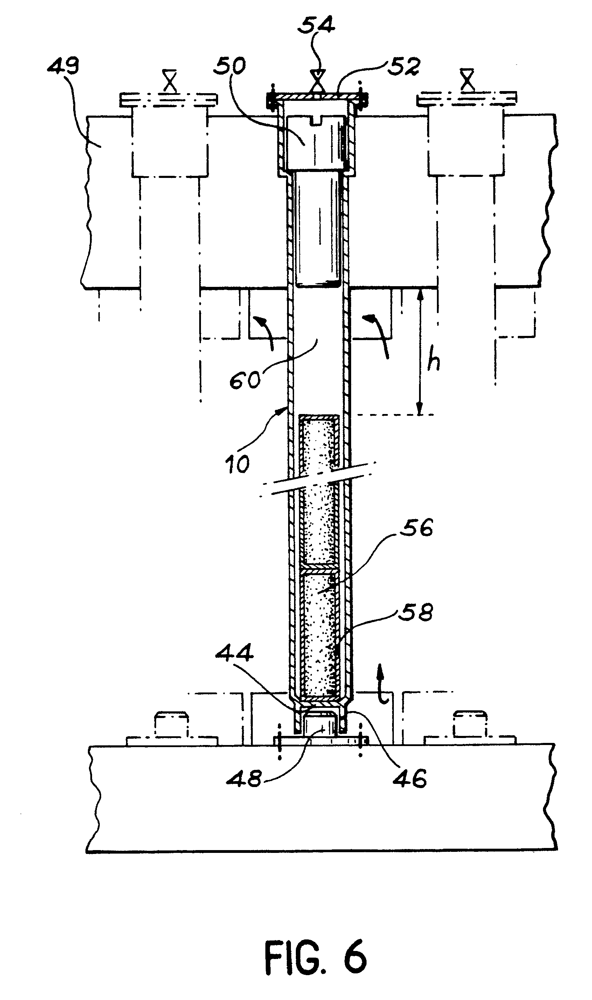

La constitution des puits 10 et de leur dispositif de fermeture apparaît mieux sur la vue en coupe de la figure 6. On voit sur cette figure que chaque puits 10 se compose d'un tube cylindrique fermé à sa partie inférieure par un fond 44. Ce dernier est prolongé par une couronne 46 qui entoure un pied 48 scellé au plancher. Le rôle de cette couronne est de maintenir le puits en position dans le sens radial, particulièrement en cas de séisme, tout en permettant un déplacement vertical dû à la dilatation du puits. Pour cela, la couronne 46, qui est généralement rapportée sur le fond 44 du puits 10, a des dimensions telles qu'elle ne touche pas le plancher du local de stockage ni le support du pied 48.

Bien entendu, on ne sortirait pas du cadre de l'invention en remplaçant la couronne 46 par tout système équivalent, par exemple plusieurs pions de centrage entourant le pied 48.

La figure 9 illustre une variante dans laquelle les puits 10 sont fixés à leur partie inférieure au plancher du local de stockage, comme cela est indiqué en 51. Comme cela sera expliqué ci-dessous, la partie supérieure des puits 10 passe à travers la dalle supérieure 49 afin qu'ils soient accessibles depuis la salle de manutention. Dans cette variante, ce sont des soufflets qui permettent la dilatation dans le sens vertical. Sur la partie gauche de la figure, une partie du puits 10c à gauche de la figure est réalisée sous forme d'un soufflet 53 tandis que le puits 10d à droite de la figure repose sur la face supérieure de la dalle 49 par l'intermédiaire d'un soufflet 55. Dans l'un et l'autre cas, les puits 10 sont libres de se déplacer par rapport à la dalle 49.

La partie supérieure du tube 10 se trouve à l'intérieur d'une dalle de béton 49 et un bouchon 50, dont la hauteur est sensiblement égale à l'épaisseur de la dalle 49, assure le confinement biologique à la partie supérieure du tube 10 (figure 6). Ce dernier est fermé, au-dessus du bouchon 50, par un couvercle 52 équipé d'une vanne de prélèvement 54.

Les déchets 56 (par exemple du combustible irradié) sont placés à l'intérieur d'un conteneur ou d'un gainage 58. Pour introduire les déchets à l'intérieur du puits 10 depuis la salle de manutention 40, on commence par retirer le couvercle 52, puis le bouchon 50, et on introduit les conteneurs 58 un par un à l'intérieur du tube 10 à l'aide du pont roulant 42 (figure 5).

On voit sur la figure 6 que les conteneurs 58 n'occupent pas la totalité de la hauteur du puits 10, ce qui permet de laisser un espace libre 60, c'est-à-dire ne contenant pas de déchets, à la partie supérieure de celui-ci. Comme cela a été indiqué plus haut, la hauteur h de la partie 60 est déterminée de manière qu'elle soit sensiblement égale à l'épaisseur de la couche d'air chaud qui se forme à la partie supérieure du local. Ainsi, l'air qui arrive en contact avec la partie supérieure 60 d'un puits 10 peut être de l'air déjà échauffé, mais ceci n'est pas gênant puisqu'il n'est pas nécessaire de refroidir cette partie du puits.

Dans le cas de produits dangereux ou radioactifs, le confinement est assuré par une double barrière constituée d'abord par la gaine 58 et ensuite par les parois du puits 10. Cependant, il peut y avoir des fuites dans la paroi d'un conteneur 58 et, dans le cas le plus défavorable, également dans la paroi du tube 10, ce qui risque de contaminer l'air de refroidissement. La vanne de prélèvement 54 prévue sur le couvercle 52 du puits 10 permet, par des contrôles réguliers, de déterminer si l'atmosphère à l'intérieur du puits est contaminée et donc s'il y a une fuite dans l'un des conteneurs stockés. Cependant, au cas où le tube 10 présenterait lui-même une fuite, ce qui risque de contaminer l'air de refroidissement, un circuit de dérivation de secours est prévu sur le conduit d'extraction 28, comme cela est illustré à la figure 7.

On retrouve sur cette figure l'orifice d'extraction d'air chaud 16 à la partie supérieure du local 11 et le conduit d'extraction ou cheminée 28. On a prévu, montée en parallèle sur le conduit 28, une conduite 62 communiquant avec ce dernier par un orifice d'entrée 64 et un orifice de sortie 66 : celui-ci est placé en aval de l'orifice 64 par rapport au sens d'écoulement de l'air dans le conduit 28. D'autre part, un clapet d'obturation 68 est monté à l'intérieur du conduit 28 et peut obturer celui-ci entre les orifices 64 et 66 de la conduite 62. Dans le cas particulier décrit ici, le clapet 68 se présente sous la forme d'un panneau pouvant pivoter autour d'un axe 70 et mobile entre une position d'ouverture 68a, représentée en traits pleins, et une position de fermeture 68b représentée en traits mixtes : en position de fermeture, il empêche l'air de sortir directement par le conduit d'extraction 28.

Un filtre à très haute efficacité 72 est monté sur la conduite 62 afin de filtrer l'air passant à travers cette conduite. Dans le cas particulier décrit ici, cette dernière est encore équipée, en aval du filtre, d'un ventilateur ou autre système de mise en circulation d'air 74. Enfin, une sonde de détection de radioactivité 76 est placée à l'intérieur du conduit 28 en aval de l'orifice de sortie 66 de la conduite 62. La sonde 76 est reliée par des moyens d'asservissement 78, d'une part au ventilateur 74 et, d'autre part, au clapet 68.

Le fonctionnement de ce circuit dérivé de secours est le suivant :

Si une fuite se produit dans une gaine 58 et dans la paroi du puits 10 qui contient cette gaine, l'air de refroidissement est contaminé et la radioactivité est détectée par la sonde 76. A ce moment, par l'intermédiaire du dispositif d'asservissement 78, la sonde commande la fermeture du clapet 68 et la mise en route du ventilateur 74. Ainsi l'air chaud extrait du local 11 ne passe plus directement à travers le conduit 28, mais à travers la conduite 62 où il est filtré par le filtre 72 qui retient la presque totalité des poussières radioactives. C'est donc de l'air propre et ne présentant pratiquement pas de contamination qui est rejeté à l'extérieur. Eventuellement, les moyens d'asservissement 78 peuvent également commander une alarme pour que des contrôles d'étanchéité des puits de stockage 10 et des conteneurs 58 soient effectués à partir de la salle de manutention 40. En effet, le local 11 est généralement classé comme zone interdite au personnel et il n'y a pas d'appareil de contrôle dans ce local.

Il est préférable que la sonde 76 se trouve en aval de l'orifice 66 dans le conduit 28, car elle permet ainsi de vérifier que l'air sortant du circuit dérivé de secours n'est pas contaminé et, donc, de contrôler le bon fonctionnement de ce circuit.

Ainsi, le dispositif objet de l'invention présente des avantages particulièrement intéressants puisque chaque puits est refroidi de manière indépendante par convection naturelle. Il n'est donc plus nécessaire d'avoir des ventilateurs ou autres dispositifs de mise en circulation de l'air de refroidissement et le dispositif fonctionne quelles que soient les dimensions du local de stockage.

## Revendications

1. Dispositif de stockage à sec de matériaux dégageant de la chaleur, comprenant au moins un puits (10) à l'intérieur duquel lesdits matériaux (56) sont stockés, le puits (10) étant placé à l'intérieur d'un local (11) limité par une paroi (12) présentant au moins une entrée de fluide caloporteur froid (14) à sa partie inférieure et une sortie de fluide caloporteur chaud (16) à sa partie supérieure, les parois du puits (10) s'échauffant sous l'effet de la chaleur dégagée par lesdits matériaux (56) et entraînant la création, par convection naturelle, d'une couche limite (20) du fluide caloporteur, ladite couche limite étant définie par la couche ascensionelle de fluide chaud qui se forme naturellement autour de chaque puits (10) à cause de la chaleur dégagée par les matériaux stockés (56) à l'intérieur du local, l'épaisseur de ladite couche limite augmentant au fur et à mesure que le fluide caloporteur s'élève le long du puits, la distance entre ledit puits (10) et la paroi (12) ou un puits voisin étant telle que ladite couche limite (20) ne soit en contact ni avec la paroi (12), ni avec la couche limite du puits voisin, le refroidissement de chaque puits (10) étant ainsi assuré de manière indépendante, la sortie de fluide chaud (16) étant reliée à un conduit d'extraction (28) équipé d'un circuit dérivé de secours comprenant:
   - une conduite (62) branchée en parallèle sur le conduit d'extraction (28) et communiquant avec celui-ci par un orifice d'entrée (64) et un orifice de sortie (66) ;
   - un filtre à très haute efficacité (72) monté sur cette conduite (62), de manière à filtrer le fluide circulant dans cette dernière ;
   - des moyens pour obturer le conduit d'extraction (28) entre ledit orifice d'entrée (64) et ledit orifice de sortie (66) ;
   - un détecteur de radioactivité (76) dans le conduit d'extraction (28) ; et
   - des moyens d'asservissement (78) reliant ce détecteur auxdits moyens d'obturation (68).

2. Dispositif selon la revendication 1, caractérisé en ce que ladite conduite (62) est équipée d'un ventilateur d'extraction (74) monté en aval du filtre (72).

3. Dispositif selon la revendication 2, caractérisé en ce que le ventilateur d'extraction (74) est relié au détecteur de radioactivité (76) par des moyens d'asservissement (78).

4. Dispositif selon l'une quelconque des revendications 1 à 3, caractérisé en ce que la disposition des matériaux (56) stockés dans le puits (10) est telle qu'aucun matériau ne se trouve dans la partie supérieure (60) du puits (10).

5. Dispositif selon l'une quelconque des revendications 1 et 4, caractérisé en ce que le plafond (17) du local de stockage (11) est incliné et s'élève en direction de la sortie de fluide chaud (16) afin de favoriser l'extraction du fluide chaud.

6. Dispositif selon l'une quelconque des revendications 1 et 4, caractérisé en ce qu'il comporte un déflecteur (19) placé à la partie supérieure du local de stockage (11), ce déflecteur (19) étant incliné et s'élevant en direction de l'orifice de sortie de fluide chaud (16) afin de favoriser l'extraction du fluide chaud.

## Claims

1. Apparatus for the dry storage of heat-emitting materials, comprising at least one tube (10) within which are stored the said materials (56), the tube (10) being placed within a room (11) defined by a wall (12) having at least one cold heat-transfer fluid inlet (14) in its lower part and a hot heat transfer fluid outlet (16) in its upper part, the walls of the tube (10) heating under the action of the heat emitted by the said materials (56) and leading to the formation, by natural convection, of a limiting layer (20) for said heat transfer fluid, said limiting layer being defined by the hot fluid layer which naturally forms around the tube (10) due to the heat emitted by the materials (56) stoored within the room, the thickness of said limiting layer increasing as the heat transfer fluid rises along the tube, the distance between the said tube (10) and the wall (12) or an adjacent tube being such that said limiting layer (20) is not in contact either with the wall (12), or with the limiting layer of the adjacent tube, the cooling of each tube (10) thus being ensured in an independent manner, the hot fluid outlet (16) being connected to an extraction pipe (28) equipped with a standby branch circuit incorporating a duct (62) connected in parallel to the extraction pipe (28) and connected thereto by an inlet port (64) and an outlet port (66), a very efficient filter (72) mounted on the said duct (62), so as to filter the fluid flowing in the latter, means for sealing the extraction pipe (28) between said inlet ports (64) and said outlet port (66), a radioactivity detector (76) in the extraction pipe (28) and control means (78) connecting said detector to said sealing means (68).

2. Apparatus according to claim 1, characterized in that said duct (62) is equipped with an extractor fan (74) fitted downstream of the filter (72).

3. Apparatus according to claim 2, characterized in that the extractor fan (74) is connected to the radioactivity detector (76) by control means (78).

4. Apparatus according to any one of the claims 1 to 3, characterized that the arrangement of the materials (56) stored in the tube (10) is such that there is no material in the upper part (60) of the tube (10).

5. Apparatus according to any one of the claims 1 and 4, characterized in that the ceiling (17) of the storage room (11) inclined and rises in the direction of the hot fluid outlet (16), so as to aid the extraction of the hot fluid.

6. Apparatus according to any one of the claims 1 and 4, characterized in that it has a deflector (19) positioned in the upper part of the storage room (11), said deflector (19) being inclined and rising in the direction of the hot fluid outlet port (16), so as to aid the extraction of the hot fluid.

**Patentansprüche**

1. Verfahren zum trockenen Lagern von wärmeabgebenden Materialien die wenigstens eine Bohrung (10) umfaßt, in deren Inneren diese Materialien (56) gelagert werden, wobei diese Bohrung (10) im Inneren eines Raumes (11) angeordnet ist, der von einer Wand (12) begrenzt wird, die wenigstens einen Eingang für kaltes Kühlfluid (14) in ihrem unteren Bereich und einen Ausgang für warmes Kühlfluid (16) in ihrem oberen Bereich umfaßt, wobei sich die Wände der Bohrung (10) unter dem Einfluß der von den Materialien abgegebenen Wärme erwärmen und durch natürliche Konvektion die Erzeugung einer Grenzschicht (20) des Kühlfluids bewirken, wobei diese Grenzschicht durch die aufsteigende Schicht von warmem Fluid, die sich natürlicherweise aufgrund der von den im Inneren des Raumes gelagerten Materialien abgegebenen Wärme um jede Bohrung (10) bildet, gebildet wird, wobei die Dicke der Grenzschicht sich in dem Maße vergrößert, in der das Kühlfluid entlang der Bohrung emporsteigt, wobei der Abstand zwischen der Bohrung (10) und der Wand (12) oder einer benachbarten Bohrung derart ist, daß die Grenzschicht (20) weder mit der Wand (12) nach mit der Grenzschicht der benachbarten Bohrung in Berührung kommt, wobei die Abkühlung jeder Bohrung (10) dadurch unabhängig sichergestellt ist, wobei der Ausgang für das warme Fluid mit einem Ausgußrohr (28) verbunden ist, das mit einem Sekundärsicherheitskreislauf ausgerüstet ist, der umfaßt:
- eine parallel auf dem Ausgußrohr (28) aufgezweigte Röhre (62), die mit diesem über eine Eingangsöffnung (64) und eine Ausgangsöffnung (66) in Verbindung steht;
- ein Filter (72) mit sehr hoher Wirksamkeit, das auf dieser Röhre (62) so montiert ist, daß es das in dieser letzteren zirkulierende Fluid filtert;
- eine Vorrichtung zum Verschließen des Ausgußrohrs (28) zwischen der Ein-gangsöffnung (64) und der Ausgangsöff-nung (66);
- einen Detektor (76) für Radioaktivität im Ausgußrohr (28); und
- eine Regelungsvorrichtung (78), die die-sen Detektor mit der Verschlußvorrich-tung (68) verbindet.

2. Vorrichtung nach Anspruch 1, dadurch gekennzeichnet, daß die Röhre (62) mit einem Abzugsventilator (74) unterhalb des Filters (72) versehen ist.

3. Vorrichtung nach Anspruch 2, dadurch gekennzeichnet, daß dieser Abzugsventilator (74) über die Regelungsvorrichtung (78) mit dem Radioaktivitätsdetektor (76) verbunden ist.

4. Vorrichtung nach einem der Ansprüche 1 bis 3, dadurch gekennzeichnet, daß die Anordnung der in der Bohrung (10) gelagerten Materialien (56) derart ist, daß sich kein Material in dem oberen Teil (60) der Bohrung (10) befindet.

5. Vorrichtung nach einem der Ansprüche 1 bis 4, dadurch gekennzeichnet, daß die Decke (17) des Lagerraumes (11) geneigt ist und in Richtung zum Ausgang für das warme Fluid (16) angsteigt, um den Abzug des warnen Fluids zu begünstigen.

6. Vorrichtung nach einem der Ansprüche 1 bis 4, dadurch gekennzeichnet, daß sie einen Deflektor (19) im oberen Teil des Lagerraumes (11) umfaßt, wobei dieser Deflektor (19) geneigt ist und in Richtung zur Ausgangsöffnung für das warme Fluid (16) ansteigt, um den Abzug des warmen Fluids zu begünstigen.

FIG. 1

FIG. 3

FIG. 7

FIG. 2

FIG. 4

FIG. 5

FIG. 6

FIG. 8

FIG. 9